Europäisches Patentamt

European Patent Office

Office européen des brevets

(11) Veröffentlichungsnummer: 0 594 996 A2

# EUROPÄISCHE PATENTANMELDUNG

(21) Anmeldenummer: 93114600.5

(22) Anmeldetag: 10.09.93

(51) Int. Cl.5: G02B 6/26, G02B 6/255

(30) Priorität: 30.10.92 DE 4236806

(43) Veröffentlichungstag der Anmeldung:
04.05.94 Patentblatt 94/18

(84) Benannte Vertragsstaaten:
DE FR GB IT

(71) Anmelder: Siemens Aktiengesellschaft
Wittelsbacherplatz 2
D-80333 München(DE)

(72) Erfinder: Finzel, Lothar
Münchner Ring 2
D-85716 Unterschleissheim(DE)
Erfinder: Loch, Manfred, Dr.
Knotestrasse 16
D-81479 München(DE)

(54) Optisches Dämpfungsglied, Verfahren zu seiner Herstellung und ein hierzu geeignetes thermisches Spleissgerät.

(57) Das optische Dämpfungsglied besteht aus zwei Lichtwellenleitern (L1 und L2) die mit gegeneinander versetzten Achsen zusammengeschweißt sind. Einem gewünschten Dämpfungswert (D) entspricht ein empirisch ermittelter Versatz (V) der Lichtwellenleiter. Durch ein gesteuertes thermisches Spleißgerät können Dämpfungsglieder mit hoher Genauigkeit hergestellt werden.

FIG 2

EP 0 594 996 A2

Die Erfindung betrifft ein optisches Dämpfungsglied für optische Netze, ein Verfahren zu seiner Herstellung und ein thermisches Spleißgerät.

Bei optischen Netzen darf der Empfangspegel nur in einen geringen Bereich schwanken. Die Summe aller durch linientechnische Komponenten wie Koppler, Spleiße und Stecker hervorgerufenen Zusatzdämpfung muß daher auf den Sendepegel und den minimalen Empfangspegel abgestimmt sein. Andererseits ist entsprechend der begrenzten Systemdynamik eine bestimmte Grunddämpfung erforderlich, z.B. für die Lasersicherheit, die bei geringen Leitungslängen nicht gegeben ist. Durch Einschalten von Dämpfungsgliedern wird die erforderliche Grunddämpfung erreicht.

In dem US-Patent 4,557,556 ist ein Verfahren zur Herstellung von Dämpfungsgliedern durch Verschweißen von Lichtwellenleitern mit gegeneinander versetzten Achsen bekannt.

In dem US-Patent 4,659,217 ist ein Verfahren zum Herstellen von Schweißverbindungen bekannt, bei dem ein genaues Ausrichten der Lichtwellenleiter durch Messung der Dämpfung erfolgt.

Die Genauigkeit der mit diesen Verfahren herstellbaren Dämpfungsglieder ist oft nicht ausreichend, außerdem ist keine Lösung für einen Spleißschutz angegeben, der eine temperaturunabhängige Dämpfung sicherstellt.

Aufgabe der Erfindung ist es, ein geeignetes Dämpfungsglied mit hoher Genauigkeit anzugeben. Das Dämpfungsglied soll durch einen Spleißschutz problemlos einsetzbar und temperaturunabhängig sein. Außerdem ist ein geeignetes Verfahren und ein Spleißgerät zur Herstellung dieses Dämpfungsgliedes anzugeben.

Die Aufgabe wird durch ein im Patentanspruch 1 angegebenes Dämpfungsglied gelöst.

In unabhängigen Ansprüchen sind ein geeignetes Verfahren zur Herstellung des Dämpfungsgliedes und ein geeignetes Spleißgerät angegeben.

Vorteilhafte Weiterbildungen der Erfindung sind in den Unteransprüchen angegeben.

Besonders günstig ist die einfache Herstellung des Dämpfungsgliedes durch Verschweißen zweier Lichtwellenleiter. Durch Dämpfungsmessungen während des Schweißens und Steuerung der Schweißdauer wird eine hohe Genauigkeit der Dämpfung erzielt.

Durch nochmaliges großräumiges Erwärmen der Schweißstelle und geringfügiges Ziehen wird die Oberfläche der Schweißstelle verbessert und die Kernverbiegung teilweise aufgehoben. Da Druckspannungen sich radial um den LWL ausbilden, steigt seine Zugfestigkeit und Elastizität an.

Werden die verspleißten Lichtwellenleiter von einer dauerelastischen Masse oder elastischen Folie umgeben in einem Spleißschutz befestigt, dann weist ihre Dämpfung praktisch keinen Temperaturgang auf.

Durch ein U-förmiges Außengehäuse mit federnden Schenkeln können die Spleiße auf einer Aufnahmeeinrichtung befestigt werden.

Vorteilhaft ist die Anordnung eines Dämpfungsglied in einer Minikassette, die gleichzeitig auch mindestens eine Spleißeinrichtung zum Anspleißen eines Lichtwellenleiters aufweist.

Das Dämpfungsglied ist bereits mit einem Lichtwellenleiter-Stecker vorkonfektioniert, der an eine Teilnehmer-Anschlußeinheit (ONU) geführt wird.

Das Spleißgerät entspricht im wesentlichen einem herkömmlichen Gerät, das mit den notwendigen Meß- und Steuereinrichtungen versehen ist.

Die Erfindung wird anhand von Ausführungsbeispielen näher erläutert.

Es zeigen:

| Fig. 1 | Ein Prinzipschaltbild zur Durchführung des Verfahrens, |
| Fig. 2 | Eine Anordnung der Lichtwellenleiter beim Verschweißen, |
| Fig. 3 | Ein Dämpfungsdiagramm, |
| Fig. 4 | Ein Prinzipschaltbild eines passiven optischen Netzes, |
| Fig. 5 | ein Ausführungsbeispiel einer Kassette mit Dämpfungsglied, |
| Fig. 6 | den Temperaturgang eines Dämpfungsgliedes in einem herkömmlichen Spleißschutz |
| Fig. 7 | den Temperaturgang bei Verwendung eines modifizierten Spleißschutzes, |
| Fig. 8 | einen modifizierten Spleißschutz, |
| Fig. 9 | die Seitenansicht des Spleißschutzes, |
| Fig. 10 | eine Variante des Spleißschutzes und |
| Fig. 11 | eine Schnittdarstellung dieses Spleißschutzes. |

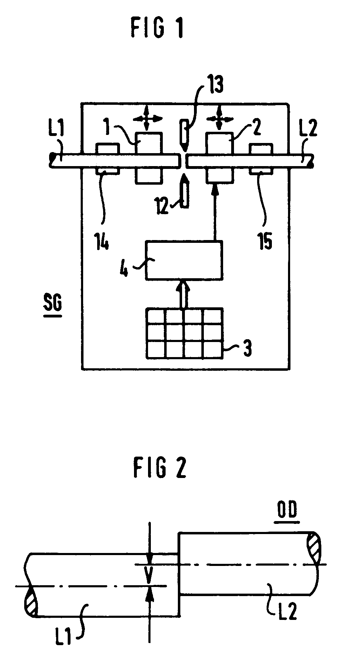

In Figur 1 ist das Prinzipschaltbild einer Vorrichtung zum Herstellen von optischen Dämpfungsgliedern dargestellt. Ein geeignetes thermisches Spleißgerät B60 wird von der Firma RXS, Profilstraße 4, D-5800 Hagen 1 hergestellt und ist im Prospekt Best.-Nr. A 19100-R1-W105-V2 beschrieben. Zwei Lichtwellenleiter L1 und L2 sind in zwei Halterungen 1 und 2 angeordnet, die zum genauen Zentrieren der Lichtwellenleiterachsen dienen. Beide Haltevorrichtungen 1 und 2 sind hierbei beweglich ausgeführt. Bisher erfolgte eine exakte Justierung der Lichtwellenleiter vor dem Schweißvorgang. Zunächst erfolgt diese Justierung auch bei der Herstellung eines Dämpfungsgliedes. Nunmehr kann aber über eine Eingabeeinrichtung 3 und eine Steuerung 4 eine gewünschte Dämpfung gewählt werden, die einem bestimmten Versatz zwischen den Achsen der Lichtwellenleiter L1 und L2 entspricht. Die Steuerung 4 setzt den gewünschten Dämpfungswert in den entsprechenden Versatz V um. Anschließend erfolgt die Verschweißung der Lichtwellenleiter L1 und L2 in bekannter Weise.

Figur 2 zeigt den Versatz V zwischen den Achsen der Lichtwellenleiter L1 und L2 eines optischen Dämpfungsgliedes OD.

In Figur 3 ist ein Diagramm angegeben, das den Dämpfungswert D in Abhängigkeit vom Versatz V und der Schweißzeit TS als Parameter angibt.

Die Dämpfung D errechnet sich näherungsweise zu

$$D = 10 \lg \left( e^{-k\left(\frac{v}{w}\right)^2} \right)$$

wobei w der Feldradius (Radius) der zu verspließenden Lichtwellenleiter ist. Der Faktor k ist eine Funktion der Schweißzeit. Es muß noch ein Dämpfungswert für den Luftspalt, bei exakt ausgerichteten Fasern 0,3 dB, berücksichtigt werden.

Der absichtlich eingestellte Versatz der Fasern führt beim Verspleißen an der Koppelstelle zu einer Kernverbiegung (Deformation der ursprünglichen Lichtwellenleiterstruktur), die durch den Selbstzentriereffekt, bedingt durch die Oberflächenspannung, hervorgerufen wird. Diese Kerndeformation wird um so stärker sein, je länger die Schweißzeit TS ist.

Zur genauen Berechnung des erforderlichen Versatzes wäre eine äußerst komplizierte Berechnung nötig, die gerade bei Dämpfungsspleißen mit relativ hoher Dämpfung zu wesentlich höheren Fehlern führen würde als bei der hier beschriebenen "on-line"-Messung während des Verschweißens.

Für den Aufbau von optischen Netzen sind Dämpfungsglieder mit nur wenigen unterschiedlichen Dämpfungswerten ausreichend. Mit einer Stufung der Dämpfungswerte um 0,5 bis 1 dB können alle Anforderungen bis zu ca. 10 dB Dämpfung erfüllt werden. Größerer Faserversatz hat einen stärkeren Einfluß auf die Oberflächenspannung und damit auf die Kerndeformation. Die Herstellungstoleranzen werden größer.

Bei der Herstellung von Dämpfungsgliedern erfolgt zunächst eine genaue Zentrierung der Achsen beider Lichtwellenleiter L1 und L2. Dies kann im Prinzip optisch erfolgen. Ebenso kann auch in einen ersten Biegekoppler 14 vom Spleißgerät ein Meßsignal eingekoppelt werden. Im zweiten Biegekoppler 15 wird Licht ausgekoppelt und der Pegel gemessen. Die Lichtwellenleiter L1 und L2 werden solange justiert, bis die Dämpfung minimal ist und beispielsweise bei gut präparierten Faserenden 0,3 dB beträgt. Soll nun ein Dämpfungsglied von 3 dB hergestellt werden, so ist ein Versatz V einzustellen, der einer Dämpfung größer 3,3 dB entspricht. Die vor dem Schweißvorgang meßbare Dämpfung muß größer als die gewünschte Dämpfung sein, da sich - neben dem Abfall um 0,3 dB - während des Schweißens aufgrund des Selbstzentriereffekts die Dämpfung reduziert. Zur Berücksichtigung dieses Effektes ist folglich ein größerer Versatz einzustellen. Der einzustellende zusätzliche Versatz hängt vom radialen Versatz selbst und der Schweißzeit TS ab. Der einzustellende Versatz entsprechend dem gewünschten Dämpfungswert einer Tabelle bzw. einem Speicherbaustein entnommen werden.

Eine hohe Genauigkeit der Dämpfung wird durch eine Messung während des Schweißvorgangs ("on-line-Messung") erzielt. Während des Schweißvorgangs wird die Dämpfung ständig kontrolliert, und der Schweißvorgang wird zum richtigen Zeitpunkt beendet.

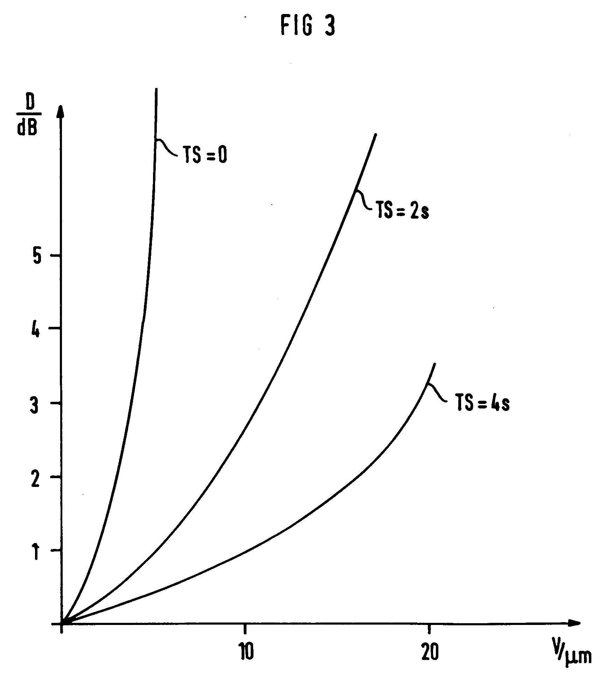

Die Dämpfung sinkt nach Fig. 3, besonders stark bei größerem Versatz V, mit der Schweißdauer, da durch die Oberflächenspannung die Fasern ausgerichtet werden.

Es können natürlich auch Lichtwellenleiter mit unterschiedlichen Coatingdurchmessern, z.B. 250 μm und 900 μm, bzw. unterschiedlichen Claddingdurchmessern zu einem Dämpfungsglied verschweißt werden. Es ist auch möglich nicht konzentrisch aufgebaute LWL mit Kernversatz zu verspleißen. Dies hat den Vorteil, daß der Mantel der Lichtwellenleiter an der Schweißstelle keinen oder nur einen geringen Versatz aufweist.

Nach dem Verschweißen wird die Schweißstelle und ihre Umgebung auf ca. 1300° bis 1500° erwärmt und um ca 50 bis 100 nm ausgezogen. Hierdurch wird die Oberflächenstruktur verbessert, Risse in der Oberfläche verschwinden, die Verteilung der radialen Druckspannungen um den LWL ist gleichmäßig, und die Schweißstelle wird weitgehend frei von unerwünschten Spannungen.

Durch mechanische Spleißschutzvorrichtungen können die Dämpfungsglieder OD mechanisch geschützt werden.

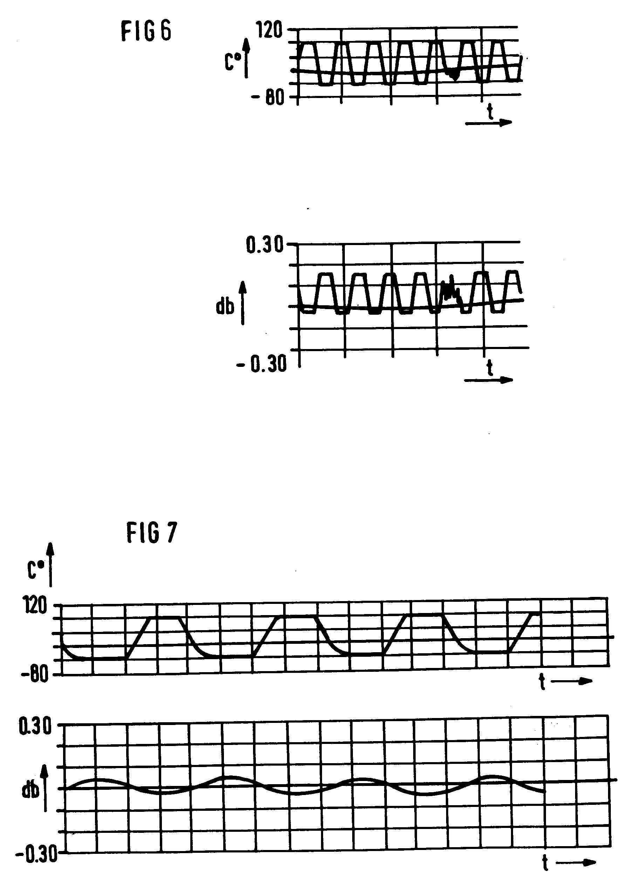

Wird ein durch Schweißen hergestelltes optisches Dämpfungsglied in einen herkömmlichen Spleißschutz (z.B. ANT-Krimpschutz) angeordnet, so wird dessen Temperaturgang auf die Schweißstelle übertragen (Fig. 6).

Wird dagegen die übliche Dichtungsmasse durch eine plastische Masse oder eine plastische Folie ersetzt, beispielsweise durch die 3M-Folie 467 high performance Bestell-Nr.

970 56 36 N oder vom Typ 9568 der Firma 3 M Deutschland, Klebebandsysteme 4040 Neuss 1, Carl-Schurz-Straße 1, so ergibt sich ein wesentlich verbesserter Temperaturgang (Fig. 7).

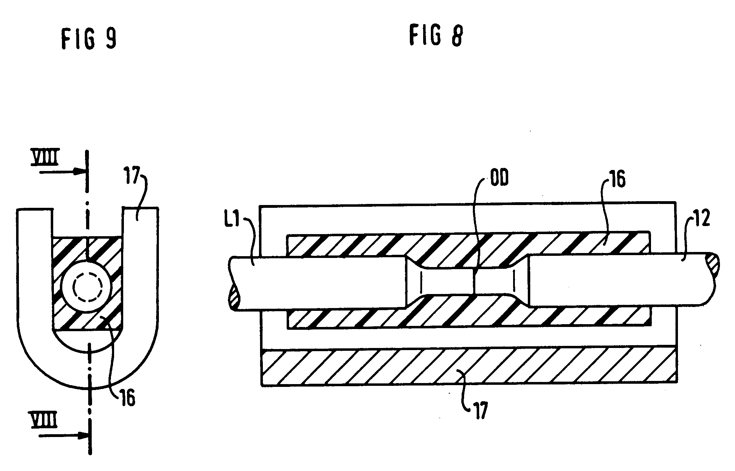

In Figur 8 und Figur 9 ist ein Dämpfungsglied OD dargestellt, das in eine Folie (Klebefolie) 16 eingebettet ist, diese ist von einem herkömmlichen Spleißschutz 17 umgeben. Durch die Folie wird die Spleißstelle gegen Umwelteinflüsse abgeschirmt.

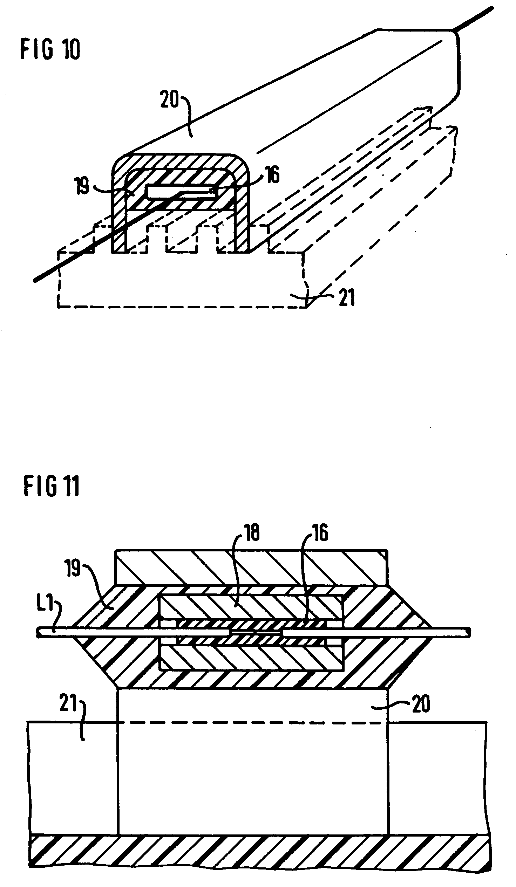

Die Figuren 10 und 11 zeigen eine weitere Ausführung eines kompletten Dämpfungsgliedes OD, das in ein u-förmiges Außengehäuse 20 eingesetzt ist. Die Schweißstelle ist wieder von einem elastischen Klebefilm 16 umgeben, der von einem inneren Schutzgehäuse 18 umgeben sein kann. Zum Schutz gegen mechanische Belastung ist das Schutzgehäuse von einer Silikonmasse 19 umgeben und in das Außengehäuse eingefügt. Dieses kann mit seinen freien Schenkeln in eine als "Spleißkamm" bezeichnete Aufnahmeeinrichtung 21 eingefügt werden. Die kegelförmig ausgebildeten Enden der Silikonmasse dienen als Knickschutz.

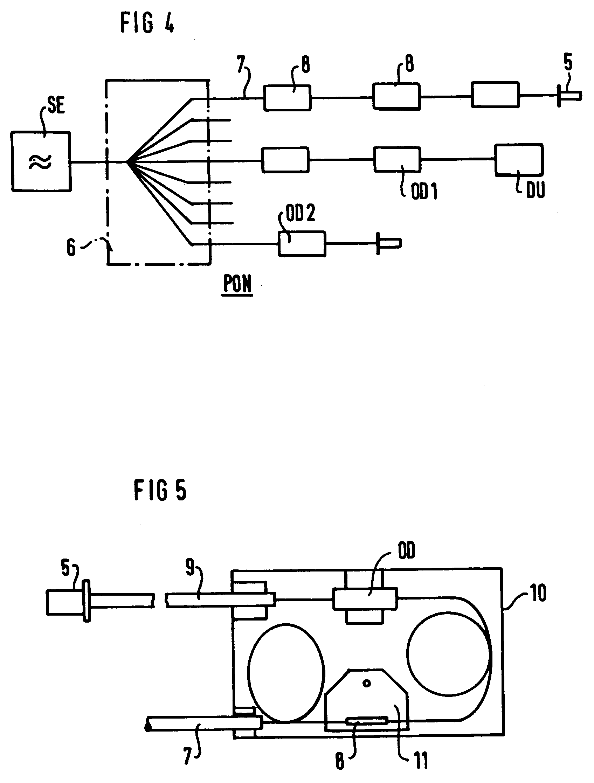

Figur 4 zeigt ein Prinzipschaltbild eines optischen Netzes PON. An eine Sendeeinrichtung SE sind über mindestens einen Splitter 6 über unterschiedlich lange Lichtwellenleiter-Kabel 7 Empfangseinrichtungen DU angeschlossen. Die Sendeleistung ist hier für den längsten Signalweg, der mehrere Spleißeinrichtungen 8 aufweist, gerade ausreichend. Für den Anschluß an eine Empfangseinrichtung kann jeweils ein optischer Stecker 5 vorgesehen sein. Die kürzeren Signalwege weisen jeweils ein optisches Dämpfungsglied OD1 bzw. OD2 auf, so daß die Empfangspegel im gewünschten Bereich liegen. Dies gilt für vorkonfektionierte Dämpfungsglieder.

Das Dämpfungsglied kann auch bei der Montage des optischen Netzes beim Verbinden des Lichtwellenleiters mit der Empfangseinrichtung DU oder als ohnehin erforderlicher Spleiß 8 realisiert werden. In diesem Fall wird das Schweißgerät so programmiert, daß genau der gewünschte Empfangspegel am Eingang der Empfangseinrichtung anliegt.

In Figur 5 ist eine Kassette 10 dargestellt, in der ein Dämpfungsglied OD und mindestens eine Spleißeinrichtung 8 in einer Halterung 11 angeordnet sind. Die Halterung kann auch so ausgebildet sein, daß sie zusätzlich das Dämpfungsglied aufnehmen kann. An das Dämpfungsglied ist bereits über eine Anschlußader 9 der optische Stecker 5 angeschlossen. Zum Anschluß einer Lichtwellenleiter-Ader 7 ist die Spleißeinrichtung 8 (ein mechanischer oder thermischer Spleiß) vorgesehen. Reservelängen der Lichtwellenleiter werden in der Kassette untergebracht.

**Patentansprüche**

1. Verfahren zur Herstellung eines optischen Dämpfungsgliedes (OD), bei dem zunächst zwei Lichtwellenleiter (L1, L2) in zwei Halterungen (1, 2) eines Spleißgerätes (SG) fixiert werden, dann eine genaue optische Ausrichtung der Achsen der Lichtwellenleiter (L1, L2) erfolgt und anschließend entsprechend eines gewählten Dämpfungswertes (D) bzw. eines Versatzes (V) die Achsen der Lichtwellenleiter (L1, L2) um den Versatz (V) gegeneinander verschoben werden,
**dadurch gekennzeichnet,**
daß während des Verschweißens der Dämpfungswert (D) gemessen wird und
daß beim Erreichen des gewünschten Dämpfungswertes (D) der Schweißvorgang abgebrochen wird.

2. Verfahren nach Anspruch 1,
**dadurch gekennzeichnet,**
daß zur Ausrichtung der Achsen der Lichtwellenleiter (L1, L2) die Dämpfung (D) gemessen wird.

3. Verfahren nach Anspruch 1 und 2,
**dadurch gekennzeichnet,**
daß die Schweißstelle erwärmt und geringfügig gezogen wird.

4. Optisches Dämpfungsglied (OD), das zwei miteinander verschweißte Lichtwellenleiter (L1 und L2) aufweist, deren Achsen gegeneinander verschoben sind,
**dadurch gekennzeichnet,**
daß zumindes die Lichtwellenleiter (L1, L2) von einer elastischen Masse (16) umgeben in einen Spleißschutz (17) eingesetzt sind.

5. Optisches Dämpfungsglied nach Anspruch 4,
**dadurch gekennzeichnet,**
daß die Lichtwellenleiter (L1, L2) an ihrer Spleißstelle mit einer Klebefolie (16) versehen ist, die auch das angrenzende Coating umfaßt.

6. Optisches Dämpfungsglied nach Anspruch 5,
**dadurch gekennzeichnet,**
daß die Klebefolie (16) eine Stärke von 100 bis 200 $\mu$m aufweist, elastisch/plastisch ist und sich der Durchmesserdifferenz von Coating- zu Claddingdurchmesser anpaßt.

7. Optisches Dämpfungsglied nach den Ansprüchen 4 bis 6,
**dadurch gekennzeichnet,**
daß es in einem U-förmigen Außengehäuse (20) mit überstehenden Schenkeln angeordnet ist, die in einen Spleißkamm (21) einsetzbar sind.

8. Spleißgerät nach einem der Ansprüche 4 bis 7,
**dadurch gekennzeichnet,**
daß das Einbettungssilikon sich kegelförmig zum LWL verjüngt.

9. Spleißgerät zum elektrischen Verschweißen von Lichtwellenleitern (L1, L2)
**dadurch gekennzeichnet,**
daß eine Eingabeeinrichtung (3) für die gewünschte Dämpfung und eine Steuerung (4) vorgesehen sind, die die Achsen beider Lichtwellenleiter (L1, L2) gegeneinander derart verschiebt, daß der eingegebene Dämpfungswert (D) beim folgenden Schweißvorgang erreicht wird, daß während des Schweißens eine Messung der Dämpfung (D) erfolgt und daß der Schweißvorgang beim Erreichen eines vorgegebenen Dämpfungswertes abgebrochen wird.

10. Spleißgerät nach Anspruch 9,
**dadurch gekennzeichnet,**
daß ein Biegekoppler (14) zum Einkoppeln eines Meß-Signals vor der Spleißstelle und ein weiterer Biegekoppler (15) zum Auskoppeln des Meßsignals vorgesehen sind.

11. Spleißgerät nach Anspruch 9 oder 10,
**dadurch gekennzeichnet,**
daß die Steuerung (4) aufgrund einer Dämpfungsmessung den Versatz (V) einstellt.

FIG 1

FIG 2

# FIG 3

FIG 4

SE

PON

6

7   8   8   5

OD1   DU

OD2

FIG 5

5   9   OD   10

7   8   11

FIG 6

FIG 7

FIG 9

FIG 8

VIII

17

OD

16

L1

12

VIII

16

17

EP 0 594 996 A2

FIG 10

20

19

16

21

FIG 11

18   16

19

L1

21   20